# EUROPEAN PATENT SPECIFICATION

(11) **EP 3 387 946 B1**
(45) Date of publication and mention of the grant of the patent: **24.05.2023**
(21) Application number: 17165718.2
(22) Date of filing: 10.04.2017
(51) Int. Cl.: A46B 5/02, A46B 9/04

(54) **ORAL CARE IMPLEMENT AND METHOD FOR MANUFACTURING SUCH ORAL CARE IMPLEMENT**
MUNDPFLEGEVORRICHTUNG UND VERFAHREN ZUR HERSTELLUNG SOLCH EINER MUNDPFLEGEVORRICHTUNG
INSTRUMENT D'HYGIÈNE BUCCALE ET PROCÉDÉ DE FABRICATION D'UN TEL INSTRUMENT D'HYGIÈNE BUCCALE

(43) Date of publication of application: 17.10.2018
(73) Proprietor: The Gillette Company LLC, Boston, MA 02127 (US)
(72) Inventor: Tschol, Armin, 61476 Kronberg (DE); Heil, Benedikt, 61476 Kronberg (DE); Sentürk Andersson, Aycan, 61476 Kronberg (DE); Venzke, Stephanie, 61476 Kronberg (DE); Hübner, Marlis, 61476 Kronberg (DE)
(74) Representative: P&G Patent Germany

(56) References cited:
- WO-A1-99/23910
- WO-A1-2013/031685
- WO-A1-2013/085006
- US-A1- 2012 227 200

## Description

### FIELD OF THE INVENTION

The present disclosure is concerned with a an oral care implement comprising a head and a handle, the head having a length extension and the handle having a length extension, the length extension of the head and the handle together defining an overall length extension of the oral care implement along a longitudinal axis.

### BACKGROUND OF THE INVENTION

Heads and handles for oral care implements, like manual and powered toothbrushes, are well known in the art. Generally, tufts of bristles for cleaning teeth are attached to a bristle carrier or mounting surface of a brush head intended for insertion into a user's oral cavity. A handle is usually attached to the head, which handle is held by the user during brushing. The head is either permanently connected or repeatedly attachable to and detachable from the handle.

In order to clean teeth effectively, appropriate contact pressure has to be provided between the free ends of the bristle tufts and the teeth. Generally, contact pressure depends not only on the bending stiffness and the displacement of the bristles, but also on the handle and head properties of the toothbrush, in particular on the shape, dimensions and bending stiffness of the handle and brush head. Usually handles of toothbrushes have the shape of a linear rod to be handled and manipulated by a user as needed. However, in the past it has been seen that such handles are neither comfortable to handle nor easy to maneuver in the oral care cavity of the user.

Usually, handles with greater length show lower bending stiffness as compared to shorter handles having a similar cross-sectional area. However, relatively long handles with relatively low thickness tend to flex away easily and the relatively low bending stiffness results in reduced plaque removal efficiency on teeth surfaces. Further, such handles provide poor maneuverability in the mouth during brushing. In order to compensate said low bending stiffness of longer handles, the size of the cross sectional area of the handle could be increased. However, relatively thick handles may also reduce ease of rotating the brush in the hand, thus, impeding the user reaching all areas in the oral cavity. Consequently, maneuverability of the overall brush is not sufficient.

In order to achieve and preserve good oral health, and to prevent gingivitis, it is important to clean teeth and gums thoroughly, in particular in hard to reach areas, e. g. in the region of the back molars. Further, gaps between teeth and periodontium, the so called gingival groove has to be thoroughly cleaned which requires a good and well-coordinated brushing technique. It is known that a lack of good removal of plaque in the gingival groove can cause gingivitis, i.e. inflammation of the gum tissue. Further, it is known that users/consumers use different brushing techniques, and, therefore, it is critical to identify optimal ergonomics of a toothbrush in order to provide good sensory feeling during brushing when using all types of brushing techniques.

An oral care implement is known from WO 2013/085006 A1.

It is an object of the present disclosure to provide an oral care implement which overcomes at least one of the above-mentioned drawbacks, in particular which provides more comfort and improved maneuverability of the oral care implement in the oral care cavity during brushing by optimizing the overall brush ergonomics. It is also an object of the present disclosure to provide a method for manufacturing such oral care implement.

### SUMMARY OF THE INVENTION

The invention is as defined in the appended claims.

In accordance with one aspect, an oral care implement comprising a head and a handle is provided, the head having a length extension and the handle having a length extension, the length extension of the head and the handle together defining an overall length extension of the oral care implement along a longitudinal axis, the overall length extension of the oral care implement being from about 194 mm to about 197 mm, wherein the ratio of the length extension of the handle to the overall length extension of the oral care implement is from about 0.59 to about 0.65.

In accordance with one aspect, a method for manufacturing such oral care implement is provided, the method comprising the following steps:
- injection molding a first component of polypropylene material forming an underlying base structure of the oral care implement,
- injection molding a second component of polypropylene material over the first component,
- injection molding a third component of thermoplastic elastomer material over the first component and the second component.

### BRIEF DESCRIPTION OF THE DRAWINGS

The invention is described in more detail below with reference to various embodiments and figures, wherein:
Fig. 1 shows a side view of an example embodiment of an oral care implement according to the present disclosure;
Fig. 2 shows a top-down view on the embodiment of Fig. 1;
Fig. 3 shows a portion of the handle of the embodiment of Fig. 1;
Fig. 4 shows a graphic highlighting the impact of toothbrush ergonomics on the overall consumer product experience;
Fig. 5 shows the "Oblique" grip style;
Fig. 6 shows the "Distal oblique" grip style;
Fig. 7 shows the "Power" grip style;
Fig. 8 shows the "Precision" grip style, and
Fig. 9 shows the "Chopstick" grip style.

### DETAILED DESCRIPTION OF THE INVENTION

The oral care implement according to the present disclosure comprises a handle and a head on which at least one tooth cleaning element, e.g. a tuft of bristles and/or one or more elastomeric elements may be fixed.

The handle and the head of the oral care implement have each a length extension extending along the longitudinal extension of the oral care implement. The length extension of the head and the length extension of the handle together define the overall length extension of the oral care implement.

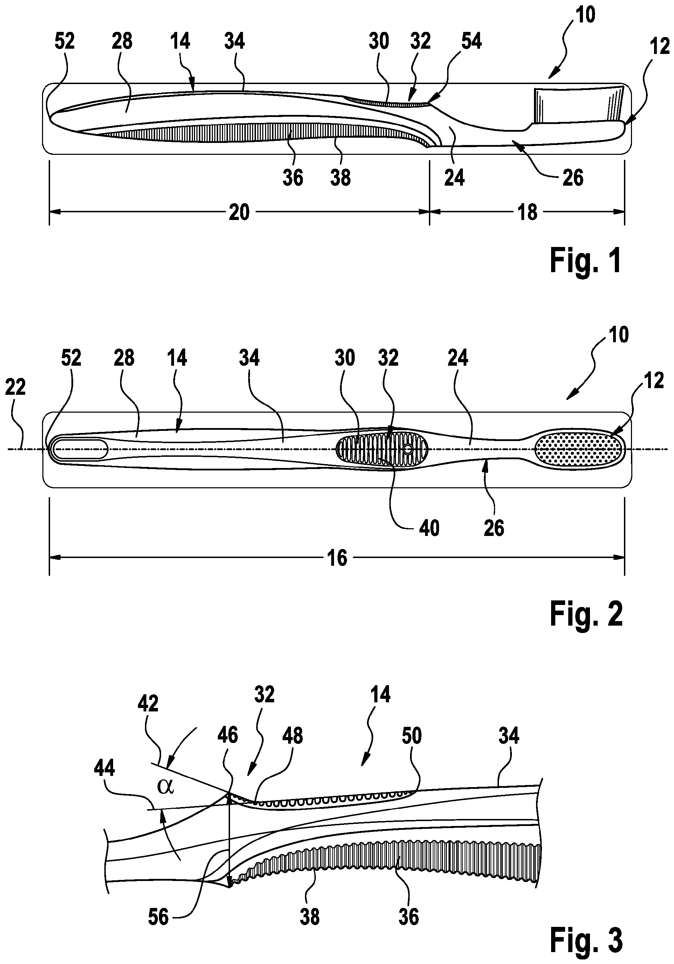

The length extension of the handle is defined as the section/portion of the oral care implement which extends from a distal end to the proximal end, i.e. to the end of the handle closest to the head. In other words, the head and handle merge at the proximal end of the handle. At the proximal end of the handle, a distance between a front surface and a back surface of the handle may have a maximum (when seen in a side view, cf. Fig. 3). In some cases, oral care implements are defined as having a head, a handle and a neck, the latter extending between the head and the handle. In the following and according to the present disclosure, a neck, usually having the smallest cross-sectional area extending substantially perpendicular to the longitudinal axis of the overall oral care implement is defined as a part of the brush head.

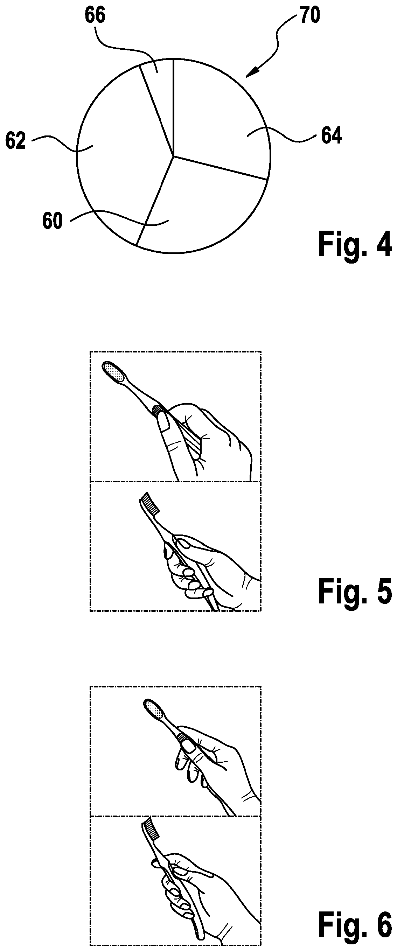

Surprisingly, consumer test results revealed that specific technical parameters for manual toothbrushes in terms of ergonomics have significant impact on the overall product experience. As shown in Fig. 4, ergonomics have an impact on the overall product experience of about 27%. Cleansing/refreshing has an impact of about 38% followed by gentleness of about 29%. Visual appearance of a toothbrush has an impact on the overall product experience of about 6%, only. According to these test results, ergonomics of manual toothbrushes are a main driver for consumer/user appeal; surprisingly, its impact is similar to the impact of gentleness. In other words, in order to achieve the desired product experience of a toothbrush, the ergonomics of a brush are as important as gentleness. Without having the right ergonomics, a toothbrush cannot clean in all regions of the mouth with sufficient cleaning satisfaction.

Further, consumer test results revealed that the following parameters are critical drivers for ergonomics and, thus, have significant impact on the overall product experience: Overall length extension of the oral care implement, ratio of the length extension of the handle to the overall length extension of the oral care implement, size of the thumb rest area, bending direction of the thumb rest (concave/convex), and angle of the thumb rest. These parameters were varied and tested to identify the ideal combination of these parameters.

In principal, there are five different grip styles or ways to hold a toothbrush during tooth brushing: "Oblique", "Distal oblique", "Power", "Precision" and "Chopstick". These grip styles can be defined by the following characteristics (cf. Figs. 5 to 9):
"Oblique": Very often used; handle weight is loosely placed in the palm; thumb is extended relative to the forefinger; allows good grip and navigation similar to cutting with a knife. Most often used for brushing as this is a common style applied for several occasions during a day, e.g. eating, hair combing, brush sweeping. In most cases consumers using this style are applying the scrubbing technique (i.e. a forth and back movement) to clean their teeth.
"Distal oblique": Very often used; handle weight is loosely placed in the palm; thumb and ring finger oppose each other; allows good grip and navigation similar to cutting with a knife. Also often used for brushing as this is a common style applied for several occasions during a day, e.g. eating, hair combing, brush sweeping. In most cases consumers using this style are applying the scrubbing technique (i.e. a forth and back movement) to clean their teeth.
"Power": Infrequently used; fingers wrap tightly around the handle; the thumb is mostly extended or wraps tightly around the handle; used by consumers thinking "more pressure cleans better", or as one of multiple changing styles during brushing for areas where consumers need better control, e.g. at the back molars or inner tooth surfaces. Some consumers are holding the handle at the lower end in order to reduce pressure. Also used by most kids when they start brushing on their own.
"Precision": Infrequently used; weight of the handle mainly on fingertips; thumb and forefinger oppose each other; as this is a non-pressure style it is often used for hard to reach or sensitive areas, e.g. at the inner tooth surfaces. Often observed as transition grip to "Distal oblique" or "Oblique", but some consumers use it as their "only grip style".
"Chopstick": Frequently used in chopstick regions; forefinger and thumb oppose each other thereby holding the handle tightly. Based on consumer habits, i.e. "Chopstick" style is very common in Asia; very familiar as it is often used for other occasions; used similar to the "Precision" style as the gentle way to clean hard to reach or sensitive areas.

Surprisingly, consumer tests revealed that an overall length extension of the oral care implement along its longitudinal axis from about 194 mm to about 197 mm, or from about 195 mm to about 196 mm, or about 195 mm in combination with a ratio of the length extension of the handle to the overall length extension of the oral care implement from about 0.59 to about 0.65, or from about 0.60 to about 0.64, or from about 0.61 to about 0.63, or about 0.62 provides improved overall product experience to users/consumers. When applying any of the above described grip styles maneuverability of a toothbrush according to the present disclosure is significantly improved. The consumer tests revealed that the toothbrush of the present disclosure allows for a well-coordinated brushing technique. These consumer tests were carried out by US Americans in Germany. Consumers of a test panel applied a combination of the above described grip styles and gave their assessment with respect to the ergonomics (cf. Table 1 below).

According to the claimed invention, the handle extension is from 119 mm to 123 mm.

The handle of the oral care implement comprises thumb rest having an area from 202 mm² to 360 mm². Such thumb rest may be made from a thermoplastic elastomer, e.g. having a Shore A hardness from 30 to 60, to prevent the oral care implement from being too slippery when used in wet conditions. The handle may be formed from two or three different materials, wherein one material may be a polypropylene material.

At least a portion of the thumb rest has a concave shape. A portion of the area of the thumb rest is angled with respect to the area of the remaining portion of the thumb rest by an angle α from 20° to about 25°.

The overall length extension of the oral care implement may be about 195 mm, the ratio of the length extension of the handle to the overall length extension of the oral care implement may be about 0.62, and the area of the thumb rest may be about 290 mm² or about 340 mm², and the angle α may be about 24°. Such ergonomics may allow for improved control and maneuverability of the oral care implement during brushing (cf. Table 1 below).

The thumb rest or gripping region may be attached onto the front surface of the handle in the region close to the proximal end, i.e. closest to the head. The thumb rest may comprise a plurality of ribs extending substantially perpendicular to the longitudinal axis of the oral care implement. Such ribs may allow users/consumers to use the oral care implement with even more control. The user/consumer can better grasp and manipulate the handle of the oral care implement during brushing. Such handle may provide further improved control and greater comfort during brushing, in particular under wet conditions.

A method for manufacturing the oral care implement according to the present disclosure may comprise the following steps:
- injection molding a first component of polypropylene material forming an underlying base structure of the oral care implement,
- injection molding a second component of polypropylene material over the first component,
- injection molding a third component of thermoplastic elastomer material over the first component and/or the second component.

The third component of thermoplastic elastomer material may form the thumb rest on the front surface of the oral care implement and a palm grip on the back surface being opposite the front surface to be gripped by the user's/consumer's fingers and thumb. Such handle configuration may even further resist slippage during use. The thermoplastic elastomer material may extend through an aperture provided in the underlying base structure and/or second component of the handle.

The oral care implement may be a manual toothbrush or a powered driven toothbrush. The oral care implement may also be an inter-proximal pick, a plaque scraper or tissue/tongue cleanser.

The following is a non-limiting discussion of example embodiments of oral care implements and parts thereof in accordance with the present disclosure, where reference to the Figures is made.

Figs. 1 and 2 show two projections of an oral care implement 10, i.e. a toothbrush 10 of the present disclosure. Fig. 1 shows a side view of the toothbrush 10, while Fig. 2 shows the respective top-down view.

Toothbrush 10 comprises a head 12 and a handle 14. An overall length extension 16 of the toothbrush 10 along its longitudinal axis 22 is composed of a length extension 18 of the head 12 and a length extension 20 of the handle 14. The overall length extension 16 of the toothbrush 10 is about 195 mm, while the length extension 18 of the head 12 is about 74 mm and the length extension 20 of the handle 14 is about 121 mm. Consequently, the ratio of the length extension 20 of the handle 14 to the overall length extension 16 of the toothbrush 10 is about 0.62. The handle has a distal end 52 furthest remote from the head 12 and a proximal end 54 closest to the head 12.

The length extension 20 of the handle 14 extends from the distal end 52 to the proximal end 54, i.e. to the end of the handle 14 closest to the head 12. The head 12 and handle 14 merge at the proximal end 54 of the handle 14. At the proximal end 54 of the handle 14, the distance 56 between a front surface 34 and a back surface 38 of the handle 14 may have a maximum (when seen in a side view, cf. Fig. 3).

Handle 14 may be formed from three different materials: A first component of a polypropylene material 24 provided by an injection molding step forms an underlying base structure 26. A second component of another polypropylene material 28 is injection molded over the first component 24, and a third component of thermoplastic elastomer material 30 is injection molded over the first and the second component 24, 28. The third component of thermoplastic elastomer material 30 may provide a thumb rest 32 on a front surface 34 of the handle 14 and a palm grip 36 on a back surface 38 of the handle 14, the back surface 38 being opposite the front surface 34.

The polypropylene material of the first component and the polypropylene material of the second component may only differ in terms of color. Both polypropylene materials are relatively hard as compared to the thermoplastic elastomer material of the third component. The thermoplastic elastomer material of the third component may have a Shore A hardness of about 30 to about 60, or about 40.

The thumb rest 32 has an area 40 of about 290 mm² or about 340 mm². The shape of the thumb rest 32 is concave, i.e. the thumb rest is inwardly curved with respect to the handle. As shown in Fig. 3, a portion of the thumb rest 32 is inclined with respect to the remaining portion of the thumb rest 32 by an angle α. The angle α may be about 24°, and is defined between a first line 42 and a second line 44. The first line 42 extends between a most elevated or highest point 46 of the thumb rest 32 and a lowest point 48 of the thumb rest 32 (as shown in the side view in Fig. 3). The second line 44 extends between the lowest point 48 of the thumb rest 32 and an end point 50, i.e. the most remote point of the thumb rest 32 closest to the distal end 52 of the handle 14.

Fig. 4 shows a graphic 70 highlighting the impact of toothbrush ergonomics 60 on the overall consumer product experience. Consumer test results revealed that ergonomics 60 have an impact on the overall product experience of about 27%. Cleansing/refreshing 62 has an impact of about 38% followed by gentleness 64 of about 29%. Visual appearance 66 of a toothbrush has an impact on the overall product experience of about 6%, only.

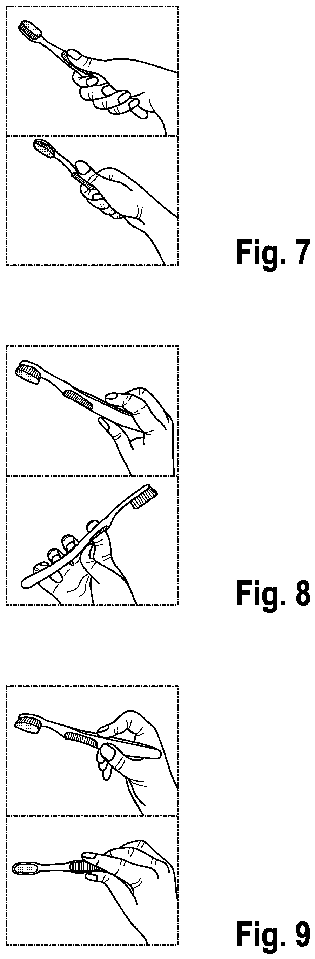

There exist five different grip styles or ways to hold a toothbrush during tooth brushing. Fig. 5 shows the "Oblique" grip style, Fig. 6 shows the "Distal oblique" grip style, Fig. 7 shows the "Power" grip style, Fig. 8 shows the "Precision" grip style, and Fig. 9 shows the "Chopstick" grip style. The characteristics when using the respective grip styles are described above.

### COMPARISON EXPERIMENTS

Consumer tests with 20 trained and experienced panelists were carried out. The panelists were asked to rate toothbrushes in terms of ergonomics and maneuverability on a scale between "0" and "10", wherein "10" represents the best rating. The panelists were brushing their teeth in front of a mirror, thereby reflecting the actual usage situation.

The following toothbrushes were tested: Example embodiment 10 according to Figs. 1 to 3 and comparative examples 100, 200, 300 and 400 according to the toothbrush specification of Table 1.

**Table 1: toothbrush specification**

| **Toothbrushes** | **10** | **100** | **200** | **300** | **400** |
|---|---|---|---|---|---|
| Rating | 7.56 | 4.85 | 3.2 | 5.95 | 6.0 |
| Overall lenght (mm) | 195 | 190 | 188 | 193 | 195 |
| Ratio length handle/ overall length | 0.62 | 0.61 | 0.59 | 0.62 | 0.66 |
| Thumb rest area (mm²) | 290 | 363 | 225 | 449 | 534 |
| Thumb rest bending direction | concave | concave | convex | concave | concave |
| Angle | 24° | 23.6° | 17.5° | 8.6° | 17.4° |

The test results clearly show performance advantages in terms of ergonomics and maneuverability of the toothbrush of the present disclosure (example embodiment 10) as compared to toothbrushes according to comparative examples 100, 200, 300 and 400. While the toothbrush of example embodiment 10 received a rating of "7.56" on a scale between "0" and "10", comparative examples 100, 200, 300 and 400 received a rating between "3.2" and "6.0" only.

The data set forth in Table 1 clearly show synergistic effects of the specific configuration/ergonomics of the toothbrush embodiment 10. In particular, the data show that the specific combination of the overall length extension of the toothbrush from about 194 mm to about 197 mm, and the ratio of the length extension of the handle to the overall length extension of the toothbrush from about 0.59 to about 0.65 provides improved maneuverability and control as compared to toothbrushes having parameters below or above the claimed ranges. For example, comparative example embodiment 400 has an overall length extension of about 195 mm. However, since the ratio of the length extension of the handle to the overall length extension of the toothbrush is relatively high, i.e. 0.66, the performance of said toothbrush is relatively poor, resulting in a rating of "6.0", only. Again, although comparative example embodiment 300 has a ratio of the length extension of the handle to the overall length extension of the toothbrush of about 0.62, the rating of said toothbrush is relatively low ("5.95"), as well, as the overall length extension of the toothbrush is too short (about 193 mm).

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

## Claims

1. An oral care implement (10) comprising a head (12) and a handle (14), the head (12) having a length extension (18) and the handle (14) having a length extension (20), the length extension (18, 20) of the head (12) and the handle (14) together defining an overall length extension (16) of the oral care implement (10) along a longitudinal axis (22), the overall length extension (16) of the oral care implement (10) being from 194 mm to 197 mm, wherein the length extension (18) of the head (12) is from 72 mm to 76 mm, **characterized in that** the length extension (20) of the handle (14) is from 119 mm to 123 mm, and the ratio of the length extension (20) of the handle (14) to the overall length extension (16) of the oral care implement (10) is from 0.59 to 0.65, and wherein the handle (14) comprises a thumb rest (32) having an area (40) from 202 mm² to 360 mm², the area (40) of the thumb rest (32) having a concave shape.

2. The oral care implement (10) of claim 1, wherein the ratio of the length extension (20) of the handle (14) to the overall length extension (16) of the oral care implement (10) is from 0.60 to 0.64, preferably from 0.61 to 0.63, further preferably 0.62.

3. The oral care implement (10) of claim 1 or 2, wherein the overall length extension (16) of the oral care implement (10) is from 195 mm to 196 mm, preferably about 195 mm

4. The oral care implement (10) of any of the preceding claims, wherein the length extension (20) of the handle (14) is 121 mm.

5. The oral care implement (10) of any of the preceding claims, wherein the length extension (18) of the head (12) is 74 mm.

6. The oral care implement (10) of any of the preceding claims, wherein the thumb rest (32) is made of thermoplastic elastomer material.

7. The oral care implement (10) of claim 6, wherein the area (40) of the thumb rest (32) is from 250 mm² to 353 mm², preferably from 270 mm² to 350 mm², even further preferably 290 mm² or 340 mm².

8. The oral care implement (10) of any of claims 6 to 7, wherein a portion of the thumb rest (32) is angled with respect to the remaining portion of the thumb rest (32) by an angle α from 20° to 25°, preferably 24°.

9. The oral care implement (10) of any of the preceding claims, wherein the overall length extension (16) of the oral care implement (10) is 195 mm, the ratio of the length extension (20) of the handle (14) to the overall length extension (16) of the oral care implement (10) is 0.62, and the area (40) of the thumb rest (32) is 290 mm² or 340 mm².

10. The oral care implement (10) of any of the preceding claims, wherein the handle (14) is formed of at least two, preferably of three different materials (24, 28, 30).

11. The oral care implement (10) of claim 10, wherein one material is polypropylene material (24, 28) and one material is thermoplastic elastomer material (30).

12. The oral care implement (10) of claim 10 or 11, wherein the thermoplastic elastomer (30) has a Shore A hardness of 30 to 60, preferably 40.

13. A method for manufacturing an oral care implement (10) according to any of the preceding claims, the method comprising the following steps:
- injection molding a first component of polypropylene material (24) forming an underlying base structure (26) of the oral care implement (10),
- injection molding a second component of polypropylene material (28) over the first component (24),
- injection molding a third component of thermoplastic elastomer material (30) over the first component (24) and the second component (28).

14. The method of claim 13, wherein the third component (30) forms a thumb rest (32) on a front surface (34) of the oral care implement (10) and a palm grip (36) on a back surface (38) of the oral care implement (10) being opposite the front surface (34).

## Patentansprüche

1. Mundpflegewerkzeug (10), umfassend ein Kopfstück (12) und einen Griff (14), wobei das Kopfstück (12) eine Längenverlängerung (18) aufweist und der Griff (14) eine Längenverlängerung (20) aufweist, wobei die Längenverlängerung (18, 20) des Kopfstücks (12) und des Griffs (14) zusammen eine Gesamtlängenverlängerung (16) des Mundpflegewerkzeugs (10) entlang einer Längsachse (22) definieren, wobei die Gesamtlängenverlängerung (16) des Mundpflegewerkzeugs (10) von 194 mm bis 197 mm ist, wobei die Längenverlängerung (18) des Kopfstücks (12) von 72 mm bis 76 mm ist,
**dadurch gekennzeichnet, dass** die Längenverlängerung (20) des Griffs (14) von 119 mm bis 123 mm ist, und
das Verhältnis der Längenverlängerung (20) des Griffs (14) zu der Gesamtlängenverlängerung (16) des Mundpflegewerkzeugs (10) von 0,59 bis 0,65 ist, und wobei der Griff (14) eine Daumenstütze (32) umfasst, die eine Fläche (40) von 202 mm² bis 360 mm² aufweist, wobei die Fläche (40) der Daumenstütze (32) eine konkave Form aufweist.

2. Mundpflegewerkzeug (10) nach Anspruch 1, wobei das Verhältnis der Längenverlängerung (20) des Griffs (14) zu der Gesamtlängenverlängerung (16) des Mundpflegewerkzeugs (10) von 0,60 bis 0,64, vorzugsweise von 0,61 bis 0,63, mehr bevorzugt 0,62 ist.

3. Mundpflegewerkzeug (10) nach Anspruch 1 oder 2, wobei die Gesamtlängenverlängerung (16) des Mundpflegewerkzeugs (10) von 195 mm bis 196 mm, vorzugsweise 195 mm ist.

4. Mundpflegewerkzeug (10) nach einem der vorstehenden Ansprüche, wobei die Längenverlängerung (20) des Griffs (14) 121 mm ist.

5. Mundpflegewerkzeug (10) nach einem der vorstehenden Ansprüche, wobei die Längenverlängerung (18) des Kopfstücks (12) 74 mm ist.

6. Mundpflegewerkzeug (10) nach einem der vorstehenden Ansprüche, wobei die Daumenstütze (32) aus einem Thermoplastelastomermaterial gefertigt ist.

7. Mundpflegewerkzeug (10) nach Anspruch 6, wobei die Fläche (40) der Daumenstütze (32) von 250 mm² bis 353 mm², vorzugsweise von 270 mm² bis 350 mm², noch mehr bevorzugt 290 mm² oder 340 mm² ist.

8. Mundpflegewerkzeug (10) nach einem der Ansprüche 6 oder 7, wobei ein Abschnitt der Daumenstütze (32) in Bezug auf den verbleibenden Abschnitt der Daumenstütze (32) um einen Winkel α von 20° bis 25°, vorzugsweise 24° abgewinkelt ist.

9. Mundpflegewerkzeug (10) nach einem der vorstehenden Ansprüche, wobei die Gesamtlängenverlängerung (16) des Mundpflegewerkzeugs (10) 195 mm ist, das Verhältnis der Längenverlängerung (20) des Griffs (14) zu der Gesamtlängenverlängerung (16) des Mundpflegewerkzeugs (10) 0,62 ist, und die Fläche (40) der Daumenstütze (32) 290 mm² oder 340 mm² ist.

10. Mundpflegewerkzeug (10) nach einem der vorstehenden Ansprüche, wobei der Griff (14) aus wenigstens zwei, vorzugsweise aus drei unterschiedlichen Materialien (24, 28, 30) ausgebildet ist.

11. Mundpflegewerkzeug (10) nach Anspruch 10, wobei ein Material ein Polypropylenmaterial (24, 28) und ein Material das Thermoplastelastomermaterial (30) ist.

12. Mundpflegewerkzeug (10) nach Anspruch 10 oder 11, wobei das Thermoplastelastomermaterial (30) eine Shore A-Härte von 30 bis 60, vorzugsweise 40 aufweist.

13. Verfahren zum Herstellen eines Mundpflegewerkzeugs (10) nach einem der vorstehenden Ansprüche, das Verfahren umfassend die folgenden Schritte:
- Spritzgießen einer ersten Komponente aus Polypropylenmaterial (24), die eine zugrundeliegende Grundstruktur (26) des Mundpflegewerkzeugs (10) ausbildet,
- Spritzgießen einer zweiten Komponente aus Polypropylenmaterial (28) über die erste Komponente (24),
- Spritzgießen einer dritten Komponente aus Thermoplastelastomermaterial (30) über die erste Komponente (24) und die zweite Komponente (28).

14. Verfahren nach Anspruch 13, wobei die dritte Komponente (30) eine Daumenstütze (32) auf einer vorderen Oberfläche (34) des Mundpflegewerkzeugs (10) und einen Handflächengriff (36) auf der rückseitigen Oberfläche (38) des Mundpflegewerkzeugs (10), die der vorderen Oberfläche (34) gegenüberliegt, ausbildet.

## Revendications

1. Instrument de soins bucco-dentaires (10) comprenant une tête (12) et un manche (14), la tête (12) ayant une extension en longueur (18) et le manche (14) ayant une extension en longueur (20), l'extension en longueur (18, 20) de la tête (12) et du manche (14) définissant ensemble une extension en longueur globale (16) de l'instrument de soins bucco-dentaires (10) le long d'un axe longitudinal (22), l'extension en longueur globale (16) de l'instrument de soins bucco-dentaires (10) allant de 194 mm à 197 mm, dans lequel l'extension en longueur (18) de la tête (12) va de 72 mm à 76 mm,
**caractérisé en ce que** l'extension en longueur (20) du manche (14) va de 119 mm à 123 mm, et
le rapport de l'extension en longueur (20) du manche (14) à l'extension en longueur globale (16) de l'instrument de soins bucco-dentaires (10) va de 0,59 à 0,65, et dans lequel le manche (14) comprend un repose-pouce (32) ayant une aire (40) allant de 202 mm² à 360 mm², l'aire (40) du repose-pouce (32) ayant une forme concave.

2. Instrument de soins bucco-dentaires (10) selon la revendication 1, dans lequel le rapport de l'extension en longueur (20) du manche (14) à l'extension en longueur globale (16) de l'instrument de soins bucco-dentaires (10) va de 0,60 à 0,64, de préférence de 0,61 à 0,63, de préférence encore est de 0,62.

3. Instrument de soins bucco-dentaires (10) selon la revendication 1 ou 2, dans lequel l'extension en longueur globale (16) de l'instrument de soins bucco-dentaires (10) va de 195 mm à 196 mm, de préférence est de 195 mm.

4. Instrument de soins bucco-dentaires (10) selon l'une quelconque des revendications précédentes, dans lequel l'extension en longueur (20) du manche (14) est de 121 mm.

5. Instrument de soins bucco-dentaires (10) selon l'une quelconque des revendications précédentes, dans lequel l'extension en longueur (18) de la tête (12) est de 74 mm.

6. Instrument de soins bucco-dentaires (10) selon l'une quelconque des revendications précédentes, dans lequel le repose-pouce (32) est constitué de matériau élastomère thermoplastique.

7. Instrument de soins bucco-dentaires (10) selon la revendication 6, dans lequel l'aire (40) du repose-pouce (32) va de 250 mm2 à 353 mm2, de préférence de 270 mm² à 350 mm², voire même de préférence est de 290 mm2 ou 340 mm2.

8. Instrument de soins bucco-dentaires (10) selon l'une quelconque des revendications 6 ou 7, dans lequel une partie du repose-pouce (32) est inclinée par rapport à la partie restante du repose-pouce (32) selon un angle α allant de 20° à 25°, de préférence de 24°.

9. Instrument de soins bucco-dentaires (10) selon l'une quelconque des revendications précédentes, dans lequel l'extension en longueur globale (16) de l'instrument de soins bucco-dentaires (10) est de 195 mm, le rapport de l'extension en longueur (20) du manche (14) à l'extension en longueur globale (16) de l'instrument de soins bucco-dentaires (10) est de 0,62, et l'aire (40) du repose-pouce (32) est de 290 mm² ou 340 mm².

10. Instrument de soins bucco-dentaires (10) selon l'une quelconque des revendications précédentes, dans lequel le manche (14) est formé d'au moins deux, de préférence de trois matériaux différents (24, 28, 30).

11. Instrument de soins bucco-dentaires (10) selon la revendication 10, dans lequel un matériau est un matériau polypropylène (24, 28) et un matériau est un matériau élastomère thermoplastique (30).

12. Instrument de soins bucco-dentaires (10) selon la revendication 10 ou 11, dans lequel l'élastomère thermoplastique (30) a une dureté Shore A de 30 à 60, de préférence de 40.

13. Procédé de fabrication d'un instrument de soins bucco-dentaires (10) selon l'une quelconque des revendications précédentes, le procédé comprenant les étapes suivantes :
- moulage par injection d'un premier composant en matériau polypropylène (24) formant une structure de base sous-jacente (26) de l'instrument de soins bucco-dentaires (10),
- moulage par injection d'un deuxième composant en matériau polypropylène (28) par-dessus le premier composant (24),
- moulage par injection d'un troisième composant en matériau élastomère thermoplastique (30) par-dessus le premier composant (24) et le deuxième composant (28).

14. Procédé selon la revendication 13, dans lequel le troisième composant (30) forme un repose-pouce (32) sur une surface avant (34) de l'instrument de soins bucco-dentaires (10) et une poignée de paume (36) sur une surface arrière (38) de l'instrument de soins bucco-dentaires (10) étant opposée à la surface avant (34).
